# FASCICULE DE BREVET EUROPEEN

(11) **EP 2 678 583 B1**
(45) Date de publication et mention de la délivrance du brevet: **20.06.2018**
(21) Numéro de dépôt: 12711936.0
(22) Date de dépôt: 24.02.2012
(51) Int. Cl.: F16F 15/123, F16F 15/121

(54) **AMORTISSEUR DE TORSION POUR UN EMBRAYAGE**
TORSIONSDÄMPFER FÜR EINE KUPPLUNG
TORSIONAL DAMPER FOR A CLUTCH

(30) Priorité: 25.02.2011 FR 1151534
(43) Date de publication de la demande: 01.01.2014
(73) Titulaire: Valeo Embrayages, 80009 Amiens Cedex 2 (FR)
(72) Inventeur: VERHOOG, Roel, 60190 Gournay Sur Aronde (FR); HENNEBELLE, Michaël, 62150 Houdain (FR)
(74) Mandataire: Cardon, Nicolas
(86) Numéro de dépôt international: PCT/FR2012/050390
(87) Numéro de publication internationale: WO 2012/114050

(56) Documents cités:
- FR-A1- 2 514 446
- FR-A1- 2 940 825
- US-A- 5 697 846

## Description

La présente invention concerne un amortisseur de torsion pour un disque d'embrayage ou un double volant amortisseur, en particulier de véhicule automobile.

Un amortisseur de torsion comprend un moyeu couplé à un voile annulaire radial, deux rondelles de guidage qui s'étendent radialement de part et d'autre du voile annulaire et qui sont reliées fixement entre elles et sont mobiles en rotation par rapport au moyeu et au voile annulaire, et des organes élastiques et des moyens de friction montés entre les rondelles de guidage et le voile annulaire pour absorber et amortir les vibrations et les acyclismes de rotation.

Le moyeu est généralement couplé à un arbre d'entrée d'une boite de vitesses et un disque d'embrayage équipé de garnitures de friction ou un volant d'inertie est couplé aux rondelles de guidage.

Les organes élastiques sont le plus souvent des ressorts hélicoïdaux agencés circonférentiellement entre le voile annulaire et les rondelles de guidage. Le débattement angulaire maximal entre le voile et les rondelles de guidage est atteint lorsque les spires des ressorts sont jointives. Si le couple transmis par l'amortisseur de torsion est trop important, les spires subissent un écrasement provoquant une fatigue et une usure prématurée des ressorts.

Afin d'éviter cela, la demande de brevet FR 2 514 446, au nom de la Demanderesse, propose de limiter le débattement angulaire entre le voile et les rondelles de guidage dans les deux sens de rotation, respectivement le sens direct et le sens rétro. Pour cela, des ouvertures oblongues sont ménagées dans l'une des rondelles de guidage et des ergots s'étendent au travers desdites ouvertures, à partir de la périphérie externe du voile. Le débattement est ainsi limité par butée des ergots contre chacune des extrémités des ouvertures.

De cette manière, au-delà d'un couple déterminé et quel que soit le sens de rotation, les ergots viennent en butée contre les extrémités des ouvertures et le couple est transmis directement des rondelles de guidage au voile.

Dans ce cas toutefois, la position et la longueur des ouvertures sont limitées, afin que les rondelles de guidage aient une tenue suffisante. En particulier, les ouvertures ne doivent pas chevaucher des encoches servant au sertissage des rondelles l'une sur l'autre.

Le débattement angulaire entre les rondelles et le voile permis par une telle structure est alors limité.

Dans le document FR 2 736 112, l'une des rondelles de guidage comporte une couronne présentant des éléments en saillie radialement vers l'intérieur, la périphérie externe du voile présentant des découpes dont les bords forment des faces d'appui situées de part et d'autre des éléments en saillie et destinées à venir en butée contre ceux-ci, dans chacun des sens de rotation.

Si les découpes sont formées au-dessus des ressorts, ces derniers doivent être rapprochés du moyeu central. Si les découpes sont formées non pas au-dessus des ressorts mais de part et d'autre de ceux-ci, la longueur des ressorts doit nécessairement être réduite. Dans les deux cas, la performance de l'amortisseur de torsion est réduite.

L'invention a notamment pour but d'apporter une solution simple, efficace et économique à ces problèmes.

Le document FR 2 940 825, qui est considéré comme étant l'état de la technique le plus proche de l'objet de la revendication 1 indépendante, décrit un amortisseur de torsion pour un embrayage, en particulier de véhicule automobile, comprenant un moyeu couplé à un voile annulaire radial, deux rondelles de guidage s'étendant radialement de part et d'autre du voile annulaire, reliées fixement entre elles et mobiles en rotation par rapport au moyeu et au voile annulaire, et des organes élastiques et des moyens de friction montés entre les rondelles de guidage et le voile annulaire pour absorber et amortir les vibrations et les acyclismes de rotation, les débattements angulaires relatifs des rondelles de guidage et du voile annulaire étant limités par des butées des rondelles de guidage, qui viennent en appui sur des parties en saillie du voile annulaire, les rondelles de guidage et le voile annulaire comportant chacun une première série de butées qui coopèrent entre elles pour limiter le débattement angulaire relatif dans un premier sens de rotation, et une seconde série de butées qui coopèrent entre elles pour limiter le débattement angulaire relatif dans un second sens de rotation opposé au premier.

A cet effet, elle propose un amortisseur de torsion pour un embrayage, en particulier de véhicule automobile, comprenant un moyeu couplé à un voile annulaire radial, deux rondelles de guidage s'étendant radialement de part et d'autre du voile annulaire, reliées fixement entre elles et mobiles en rotation par rapport au moyeu et au voile annulaire, et des organes élastiques et des moyens de friction montés entre les rondelles de guidage et le voile annulaire pour absorber et amortir les vibrations et les acyclismes de rotation, les débattements angulaires relatifs des rondelles de guidage et du voile annulaire étant limités par des butées des rondelles de guidage, qui viennent en appui sur des parties en saillie du voile annulaire, les rondelles de guidage et le voile annulaire comportent chacun une première série de butées qui coopèrent entre elles pour limiter le débattement angulaire relatif dans un premier sens de rotation, et une seconde série de butées qui coopèrent entre elles pour limiter le débattement angulaire relatif dans un second sens de rotation opposé au premier, les butées de la première série étant différentes des butées de la seconde série.

L'utilisation de deux séries de butées distinctes pour les deux sens de rotation permet d'augmenter de manière importante le débattement possible entre les rondelles de guidage et le voile annulaire. Les butées de la première série et les butées de la seconde série sont formées par des éléments en saillie distincts. Avantageusement, les éléments en saillie distincts formant les butées de la première série et les butées de la seconde série s'étendent sensiblement selon la direction axiale.

Avantageusement, la première et la seconde séries de butées sont agencées de telle sorte qu'un secteur angulaire défini par la course des butées des rondelles de guidage de la première série par rapport au voile annulaire entre la position de repos et une première position extrême et un secteur angulaire défini par la course des butées des rondelles de guidage de la seconde série par rapport au voile annulaire entre la position de repos et une seconde position extrême se chevauchent au moins partiellement.Selon une caractéristique de l'invention, les butées précitées sont présentées par des pièces qui sont rapportées sur les rondelles de guidage ou sur le voile annulaire.

Les pièces rapportées peuvent ainsi être remplacées facilement en cas d'usure ou en fonction des applications. Un même voile et/ou de mêmes rondelles de guidage peuvent alors être utilisés pour des applications nécessitant par exemple des débattements différents.

Préférentiellement, les pièces rapportées sont fixées, par exemple par des rivets, sur au moins une des rondelles de guidage et les butées du voile annulaire sont formées par des parties en saillie du voile annulaire.

Dans un mode de réalisation de l'invention, une des rondelles de guidage porte toutes les pièces rapportées comportant les butées de la première série et l'autre rondelle de guidage porte toutes les pièces rapportées comportant les butées de la seconde série.

Dans un autre mode de réalisation de l'invention, les pièces rapportées sont toutes fixées sur la même rondelle de guidage, chaque pièce rapportée comprenant une butée de la première série, et une butée de la seconde série, décalée circonférentiellement et radialement par rapport à la butée de la première série.

Dans une première forme de réalisation, les pièces rapportées sont des pièces plates formées à la presse et comportant des pattes pliées formant les butées précitées.

Dans une variante de réalisation, les pièces rapportées sont des pièces formées par découpe ou par usinage et comportant des surépaisseurs locales formant les butées précitées.

Les pièces rapportées sont de préférence en forme de secteur angulaire, dont les bords radiaux constituent des surfaces d'appui des organes élastiques de l'amortisseur.

Enfin, le débattement angulaire maximal à partir d'une position de repos dans un sens de rotation peut être différent du débattement angulaire maximal à partir de la position de repos dans l'autre sens de rotation et est de l'ordre de 10° à 40°.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un amortisseur de torsion selon l'invention, dans lequel les rondelles de guidage ont été retirées ;
- la figure 2 est une vue partielle et en coupe transversale de l'amortisseur de torsion selon l'invention ;
- les figures 3 et 4 sont des vues de dessus du voile de liaison et des pièces rapportées, respectivement en position de repos et en position de débattement maximal de l'amortisseur de torsion ;
- la figure 5 est une vue en perspective du voile et d'une pièce rapportée, selon une variante de réalisation de l'invention ;
- la figure 6 est une vue correspondant à la figure 5, pour une autre variante de réalisation ;
- la figure 7 est une vue en perspective du voile et de trois pièces rapportées, selon une autre variante de réalisation de l'invention.

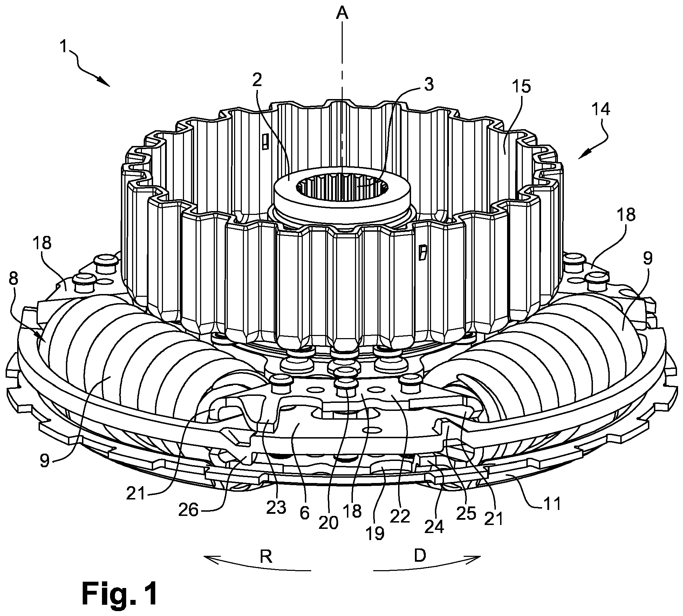

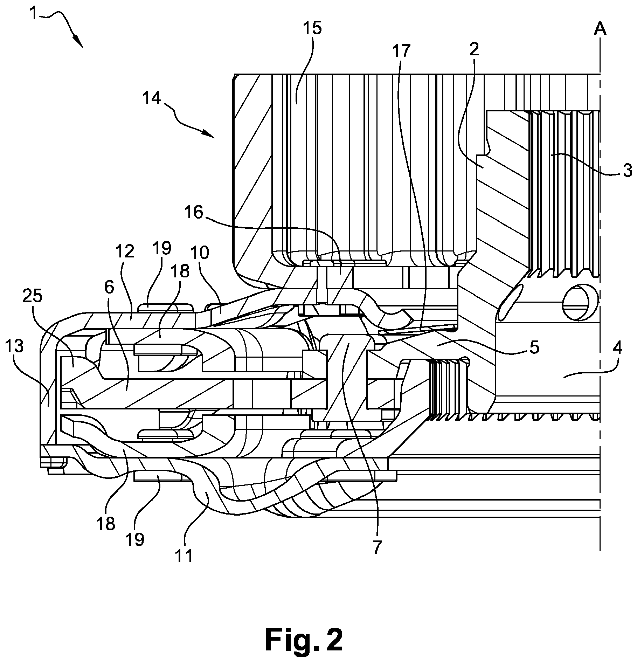

Les figures 1 et 2 représentent un amortisseur de torsion 1 pour un disque d'embrayage, en particulier de véhicule automobile, comprenant un moyeu central cylindrique 2 d'axe A dont la surface intérieure comporte une première partie cannelée 3 pour sa liaison avec un arbre mené, tel que l'arbre d'entrée d'une boite de vitesses d'un véhicule, la première partie cannelée 3 étant prolongée par une seconde partie lisse 4, de diamètre plus important. Une collerette annulaire 5 s'étend radialement vers l'extérieur depuis la seconde partie 4 du moyeu 2.

Un voile annulaire radial 6 sensiblement plan est monté autour du moyeu 2 et prend appui axialement contre la collerette 5. Le voile 6 est fixé à cette collerette 5 par l'intermédiaire de rivets 7. Le voile 6 comporte trois fenêtres 8, destinées au logement de ressorts hélicoïdaux 9 de compression, au nombre de trois dans l'exemple représenté, qui s'étendent circonférentiellement et sont répartis autour de l'axe A'.

L'amortisseur de torsion 1 comporte en outre une première et une seconde rondelles de guidage 10, 11, disposées de part et d'autre du voile annulaire 6. La première rondelle de guidage 10, située du côté de la première partie 3 du moyeu 2, comporte une partie annulaire 12 sensiblement radial, prolongée par une collerette cylindrique 13 s'étendant sensiblement axialement jusqu'à la seconde rondelle de guidage 11. Cette dernière est de forme annulaire et s'étend sensiblement radialement.

La première rondelle de guidage 10 est sertie, à l'extrémité axiale de la collerette 13, sur la périphérie externe de la seconde rondelle de guidage 1, de façon à former, avec cette seconde rondelle de guidage 11 un logement pour les ressorts 9. Ce logement 13 est susceptible de retenir un lubrifiant visqueux, tel que de la graisse ou de l'huile, autour des ressorts 9, empêchant notamment ce lubrifiant de s'échapper sous l'effet d'une force centrifuge.

Un organe de liaison 14 est en outre fixé sur la face externe de la première rondelle de guidage 10 autour du moyeu 2. L'organe de liaison 14 comporte une partie 15 globalement cylindrique présentant des cannelures, prolongée par un rebord annulaire radial 16 fixé par des rivets à la première rondelle de guidage 10. L'organe de liaison 14 est destiné à être couplé en rotation à un « lock-up » d'un convertisseur de couple.

Des moyens de friction 17 sont disposés entre la première rondelle de guidage 10 et le moyeu 2.

L'amortisseur de torsion 1 comporte ainsi deux parties mobiles l'une par rapport à l'autre, aptes à pivoter sur une plage angulaire déterminée, à savoir les rondelles de guidage 10, 11 et l'organe de liaison 14 d'une part et le voile annulaire 6 et le moyeu 2 d'autre part.

Les ressorts 9 et les moyens de friction 17 permettent, comme cela est connu en soi, d'absorber et d'amortir les vibrations et les acyclismes de rotation.

On s'intéressera dans ce qui suit à la limitation du débattement angulaire entre les deux parties mobiles précitées.

Comme cela est visible aux figures 1 à 4, deux groupes de trois pièces rapportées 18, 19 en forme de secteur angulaire sont fixés sur les rondelles de guidage, de part et d'autre du voile annulaire 6, par l'intermédiaire de rivets 20. Les pièces rapportées 18, 19 se présentent sous la forme de pièces en tôle formées à la presse et sont montées circonférentiellement entre les ressorts 9.

Plus particulièrement, dans la forme de réalisation des figures 1 à 4, chaque pièce rapportée 18, 19 comporte deux bords radiaux 21 recourbés vers l'intérieur, c'est-à-dire en direction du voile annulaire, ainsi qu'une zone médiane 22 sensiblement plane et fixée à la rondelle de guidage correspondante 10, 11.

Chaque ressort 9 prend appui sur les bords latéraux recourbés 21 des pièces rapportées 18, 19.

Bien entendu, les ressorts 9 peuvent également prendre appui sur les extrémités des fenêtres 8 du voile annulaire 6, comme cela est déjà le cas dans l'art antérieur.

La zone médiane 22 présente des périphéries radialement interne et externe qui sont incurvées. La périphérie radialement externe de chaque pièce rapportée 18, 19 comporte une patte 23, 24 pliée vers l'intérieur, c'est-à-dire en direction du voile annulaire 6.

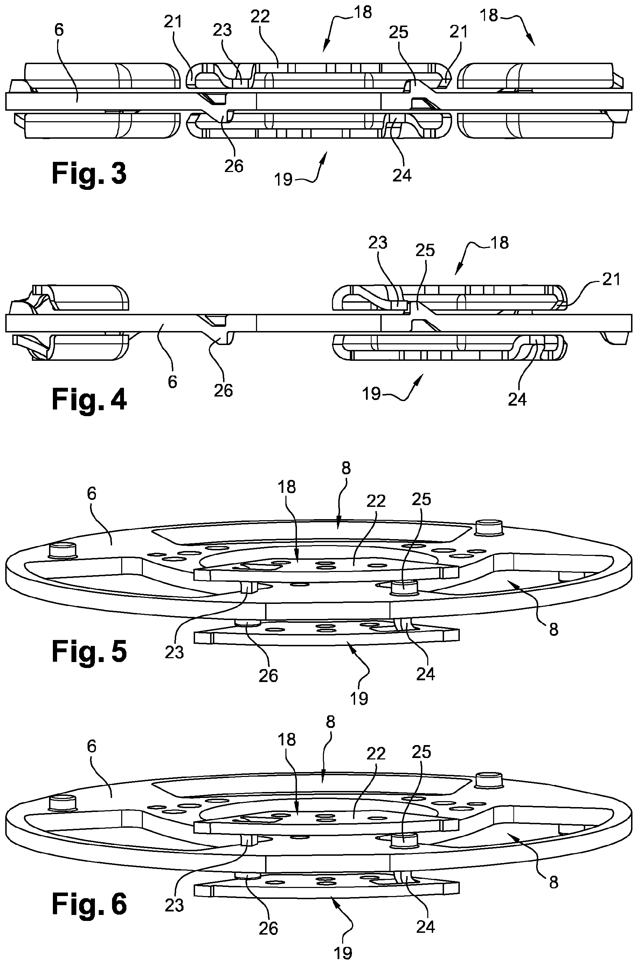

La périphérie externe du voile annulaire 6 comprend des plots 25, 26 qui s'étendent axialement de part et d'autre du voile 6 et sont obtenus par déformation. Plus particulièrement, le voile annulaire 6 comporte trois plots 25 s'étendant en direction de la première rondelle 10, régulièrement répartis sur la périphérie externe et destinés à former des butées pour les pattes 23 de trois pièces rapportées 18 fixées sur la première rondelle 10, de manière à limiter le débattement angulaire entre la rondelle de guidage 10 et le voile de liaison 6 dans un premier sens de rotation, appelé ci-après sens direct (flèche D en figure 1). On définit comme première position extrême la position de la figure 4 dans laquelle les pattes 23 des pièces rapportées 18 fixées à la première rondelle de guidage 10 sont en butée contre les plots 25 correspondants.

Le voile annulaire 6 comporte en outre trois plots 26 s'étendant en direction de la seconde rondelle 11, régulièrement répartis sur la périphérie externe et destinés à former des butées pour les pattes 24 de trois pièces rapportées 19 fixées sur la seconde rondelle de guidage 11, de manière à limiter le débattement angulaire entre la rondelle de guidage 11 et le voile de liaison 6 dans un second sens de rotation, appelé ci-après sens rétro (flèche R en figure 1). On définit comme seconde position extrême la position dans laquelle les pattes 24 des pièces rapportées 19 fixées à la seconde rondelle de guidage 11 sont en butée contre les plots correspondants 26.

Les positions des pattes 23, 24 et des plots 25, 26 sont déterminées de façon à ce que le débattement angulaire maximal entre les deux positions extrêmes précitées soit compris entre 20 et 80 °, dans le cas d'un amortisseur à trois ressorts disposés sur le même rayon par exemple. Le débattement angulaire maximal est proche de l'angle formé entre les deux extrémités adjacentes de deux ressorts successifs.

On définit par position de repos la position de l'amortisseur 1 dans laquelle les rondelles de guidage 10, 11 ne sont pas soumises à un couple d'entrée. Cette position de repos est celle représentée aux figues 1 et 3.

Le débattement, entre les rondelles de guidage 10, 11 et le voile annulaire 6, entre la position de repos et la première position extrême est égal au débattement entre la position de repos et la seconde position extrême. La somme de ces deux débattements est égale au débattement angulaire total. Ces deux débattements peuvent être différents, en fonction des applications.

La figure 5 montre une variante de réalisation dans laquelle les pattes 23, 24 des pièces rapportées 18, 19 sont formées par découpage et pliage dans la zone médiane 22, non plus au niveau de la périphérie externe mais en retrait vers l'intérieur. Les pièces rapportées 18, 19 ne comportent en outre plus de bord radial recourbé vers l'intérieur.

Les plots 25, 26 du voile 6 sont cylindriques et placés radialement sur les trajectoires des pattes 23, 24. Le fonctionnement de l'ensemble reste inchangé, les pattes 23 venant en butée contre les plots 25 dans la première position extrême, lorsque les rondelles de guidage 10, 11 tournent dans le sens direct, et les pattes 24 venant en butée contre les plots 26 dans la seconde position extrême, lorsque les rondelles de guidage 10, 11 tournent dans le sens rétro.

En variante, les butées peuvent être formées non pas par des pattes comme décrit précédemment, mais par des surépaisseurs 23, 24 réalisées par exemple par usinage (figure 6).

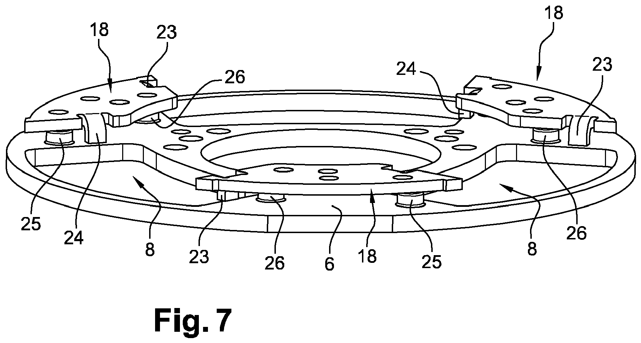

La figure 7 montre encore une autre variante dans laquelle les pièces rapportées sont toutes fixées sur la première rondelle de guidage 10, chaque pièce rapportée 18 comprenant une première patte 23 coopérant avec un plot 25 en saillie du voile 6 pour limiter le débattement dans le sens de rotation direct des rondelles de guidage 10, 11, et une seconde patte 24, décalée circonférentiellement et radialement par rapport à la première patte 23 et coopérant avec un autre plot 25 en saillie du voile 6 pour limiter le débattement dans le sens de rotation rétro.

Les deux pattes 23, 24, et également les deux plots 25, 26, sont situés à des distances différentes de l'axe central A, de sorte que les pattes 23 ne viennent pas buter contre les plots 26, mais uniquement contre les plots 25, et inversement.

Dans cette variante, les pattes 23, 24 sont formées au niveau des bords radiaux des pièces rapportées 18.

L'invention propose ainsi un amortisseur de torsion ayant un débattement angulaire maximal entre les rondelles de guidage 10, 11 et le voile annulaire 6, grâce à l'utilisation de butées distinctes 25, 26 pour les deux sens de rotation opposés. Il possède également une bonne durée de vie puisque les pièces rapportées 18, 19, qui sont les pièces soumises à une plus grande usure, peuvent être remplacées indépendamment et aisément.

## Revendications

1. Amortisseur de torsion (1) pour un embrayage, en particulier de véhicule automobile, comprenant un moyeu (2) couplé à un voile annulaire (6) radial, deux rondelles de guidage (10, 11) s'étendant radialement de part et d'autre du voile annulaire (6), reliées fixement entre elles et mobiles en rotation par rapport au moyeu (2) et au voile annulaire (6), et des organes élastiques (9) et des moyens de friction (17) montés entre les rondelles de guidage (10, 11) et le voile annulaire (6) pour absorber et amortir les vibrations et les acyclismes de rotation, les débattements angulaires relatifs des rondelles de guidage (10, 11) et du voile annulaire (6) étant limités par des butées (23, 24) des rondelles de guidage (10, 11), qui viennent en appui sur des parties en saillie (25, 26) du voile annulaire (6), les rondelles de guidage et le voile annulaire comportant chacun une première série de butées (23, 25) qui coopèrent entre elles pour limiter le débattement angulaire relatif dans un premier sens de rotation, et une seconde série de butées (24, 26) qui coopèrent entre elles pour limiter le débattement angulaire relatif dans un second sens de rotation opposé au premier, les butées de la première série (23, 25) étant différentes des butées de la seconde série (24, 26), **caractérisé en ce que** les butées de la première série (23, 25) et les butées de la seconde série (24, 26) sont formées par des éléments en saillie distincts.

2. Amortisseur selon la revendication 1, **caractérisé en ce que** les éléments en saillie distincts formant les butées de la première série (23, 25) et les butées de la seconde série (24, 26) s'étendent sensiblement selon la direction axiale.

3. Amortisseur selon la revendication 1 à 2, **caractérisé en ce que** la première (23, 25) et la seconde séries (24, 26) de butées sont agencées de telle sorte qu'un secteur angulaire défini par la course des butées (23) des rondelles de guidage (10, 11) de la première série par rapport au voile annulaire (6) entre la position de repos et une première position extrême et un secteur angulaire défini par la course des butées (24) des rondelles de guidage (10, 11) de la seconde série par rapport au voile annulaire (6) entre la position de repos et une seconde position extrême se chevauchent au moins partiellement.

4. Amortisseur selon l'une des revendications 1 à 3, **caractérisé en ce que** les butées (23, 24) sont formées sur des pièces (18, 19) qui sont rapportées sur les rondelles de guidage (10, 11) ou sur le voile annulaire (6).

5. Amortisseur selon la revendication 4, **caractérisé en ce que** les pièces rapportées (18, 19) sont fixées, par exemple par des rivets (20), sur au moins une des rondelles de guidage (10, 11) et les butées du voile annulaire sont formées par des parties en saillie du voile annulaire (6).

6. Amortisseur selon la revendication 4 ou 5, **caractérisé en ce qu'**une des rondelles de guidage (10) porte toutes les pièces rapportées (18) comportant les butées (23) de la première série, et l'autre rondelle de guidage (11) porte toutes les pièces rapportées (19) comportant les butées (24) de la seconde série.

7. Amortisseur selon la revendication 4 ou 5, **caractérisé en ce que** les pièces rapportées (18) sont toutes fixées sur une même rondelle de guidage (10), chaque pièce rapportée (18) comprenant une butée (23) de la première série, et une butée (24) de la seconde série, décalée circonférentiellement et radialement par rapport à la butée (23) de la première série.

8. Amortisseur selon l'une des revendications 4 à 7, **caractérisé en ce que** les pièces rapportées (18, 19) sont des pièces plates formées à la presse et comportant des pattes pliées (23, 24) formant les butées précitées.

9. Amortisseur selon l'une des revendications 4 à 7, **caractérisé en ce que** les pièces rapportées (18, 19) sont des pièces formées par découpe ou par usinage et comportant des surépaisseurs locales formant les butées précitées (23, 24).

10. Amortisseur selon l'une des revendications 4 à 9, **caractérisé en ce que** les pièces rapportées (18, 19) comportent des surfaces d'appui des organes élastiques de l'amortisseur.

11. Amortisseur selon la revendication 10, **caractérisé en ce que** les pièces rapportées (18, 19) sont en forme de secteur angulaire, dont les bords radiaux forment les surfaces d'appui des organes élastiques.

12. Amortisseur selon l'une des revendications 1 à 11, **caractérisé en ce que** le débattement angulaire maximal à partir d'une position de repos dans un sens de rotation (D) est différent du débattement angulaire maximal à partir de la position de repos dans l'autre sens de rotation (R).

13. Amortisseur selon la revendication 12, **caractérisé en ce que** le débattement angulaire maximal à partir d'une position de repos est de l'ordre de 10° à 40°.

## Patentansprüche

1. Torsionsdämpfer (1) für eine Kupplung, insbesondere eines Kraftfahrzeugs, der eine mit einer radialen ringförmigen Zwischenscheibe (6) gekoppelte Nabe (2), zwei Führungsscheiben (10, 11), die sich radial zu beiden Seiten der ringförmigen Zwischenscheibe (6) erstrecken, fest miteinander verbunden und bezüglich der Nabe (2) und der ringförmigen Zwischenscheibe (6) drehbeweglich sind, und elastische Organe (9) und Reibeinrichtungen (17) enthält, die zwischen die Führungsscheiben (10, 11) und die ringförmige Zwischenscheibe (6) montiert sind, um die Vibrationen und die Drehungleichheiten zu absorbieren und zu dämpfen, wobei die relativen Winkelausschläge der Führungsscheiben (10, 11) und der ringförmigen Zwischenscheibe (6) von Anschlägen (23, 24) der Führungsscheiben (10, 11) begrenzt werden, die auf vorstehenden Teilen (25, 26) der ringförmigen Zwischenscheibe (6) in Auflage kommen, wobei die Führungsscheiben und die ringförmige Zwischenscheibe je eine erste Reihe von Anschlägen (23, 25), die zusammenwirken, um den relativen Winkelausschlag in einer ersten Drehrichtung zu begrenzen, und eine zweite Reihe von Anschlägen (24, 26) aufweisen, die zusammenwirken, um den relativen Winkelausschlag in einer zweiten Drehrichtung entgegengesetzt zur ersten zu begrenzen, wobei die Anschläge der ersten Reihe (23, 25) sich von den Anschlägen der zweiten Reihe (24, 26) unterscheiden, **dadurch gekennzeichnet, dass** die Anschläge der ersten Reihe (23, 25) und die Anschläge der zweiten Reihe (24, 26) von unterschiedlichen vorstehenden Elementen gebildet werden.

2. Dämpfer nach Anspruch 1, **dadurch gekennzeichnet, dass** die die Anschläge der ersten Reihe (23, 25) und die Anschläge der zweiten Reihe (24, 26) bildenden unterschiedlichen vorstehenden Elemente sich im Wesentlichen in axialer Richtung erstrecken.

3. Dämpfer nach Anspruch 1 bis 2, **dadurch gekennzeichnet, dass** die erste (23, 25) und die zweite Reihe (24, 26) von Anschlägen so angeordnet sind, dass ein durch den Weg der Anschläge (23) der Führungsscheiben (10, 11) der ersten Reihe bezüglich der ringförmigen Zwischenscheibe (6) zwischen der Ruhestellung und einer ersten Endstellung definierter Winkelsektor und ein durch den Weg der Anschläge (24) der Führungsscheiben (10, 11) der zweiten Reihe bezüglich der ringförmigen Zwischenscheibe (6) zwischen der Ruhestellung und einer zweiten Endstellung definierter Winkelsektor einander zumindest teilweise überlappen.

4. Dämpfer nach einem der Ansprüche 1 bis 3, **dadurch gekennzeichnet, dass** die Anschläge (23, 24) auf Bauteilen (18, 19) geformt sind, die an die Führungsscheiben (10, 11) oder an die ringförmige Zwischenscheibe (6) angefügt werden.

5. Dämpfer nach Anspruch 4, **dadurch gekennzeichnet, dass** die angefügten Bauteile (18, 19) zum Beispiel durch Nieten (20) an mindestens einer der Führungsscheiben (10, 11) befestigt sind, und die Anschläge der ringförmigen Zwischenscheibe von vorstehenden Teilen der ringförmigen Zwischenscheibe (6) gebildet werden.

6. Dämpfer nach Anspruch 4 oder 5, **dadurch gekennzeichnet, dass** eine der Führungsscheiben (10) alle angefügten Bauteile (18) trägt, die die Anschläge (23) der ersten Reihe aufweisen, und die andere Führungsscheibe (11) alle angefügten Bauteile (19) trägt, die die Anschläge (24) der zweiten Reihe aufweisen.

7. Dämpfer nach Anspruch 4 oder 5, **dadurch gekennzeichnet, dass** die angefügten Bauteile (18) alle an der gleichen Führungsscheibe (10) befestigt sind, wobei jedes angefügte Bauteil (18) einen Anschlag (23) der ersten Reihe und einen Anschlag (24) der zweiten Reihe aufweist, der in Umfangsrichtung und radial bezüglich des Anschlags (23) der ersten Reihe versetzt ist.

8. Dämpfer nach einem der Ansprüche 4 bis 7, **dadurch gekennzeichnet, dass** die angefügten Bauteile (18, 19) pressgeformte flache Bauteile sind und gebogene Laschen (23, 24) aufweisen, die die erwähnten Anschläge bilden.

9. Dämpfer nach einem der Ansprüche 4 bis 7, **dadurch gekennzeichnet, dass** die angefügten Bauteile (18, 19) durch Schneiden oder maschinelle Bearbeitung gebildete Bauteile sind und lokale Überdicken aufweisen, die die erwähnten Anschläge (23, 24) bilden.

10. Dämpfer nach einem der Ansprüche 4 bis 9, **dadurch gekennzeichnet, dass** die angefügten Bauteile (18, 19) Auflageflächen für die elastischen Organe des Dämpfers aufweisen.

11. Dämpfer nach Anspruch 10, **dadurch gekennzeichnet, dass** die angefügten Bauteile (18, 19) die Form eines rechtwinkligen Sektors haben, dessen radiale Ränder die Auflageflächen der elastischen Organe bilden.

12. Dämpfer nach einem der Ansprüche 1 bis 11, **dadurch gekennzeichnet, dass** der maximale Winkelausschlag ausgehend von einer Ruhestellung in einer Drehrichtung (D) sich vom maximalen Winkelausschlag ausgehend von der Ruhestellung in der anderen Drehrichtung (R) unterscheidet.

13. Dämpfer nach Anspruch 12, **dadurch gekennzeichnet, dass** der maximale Winkelausschlag ausgehend von einer Ruhestellung in der Größenordnung von 10° bis 40° liegt.

## Claims

1. A torsional damper (1) for a clutch, particularly of a motor vehicle, comprising a hub (2) coupled to a radial annular web (6), two guide washers (10, 11) extending radially on either side of the annular web (6) and connected fixedly to one another and movably rotationally with respect to the hub (2) and the annular web (6); and elastic members (9) and friction means (17) mounted between the guide washers (10, 11) and the annular web (6) in order to absorb and damp vibrations and rotational irregularities,
relative angular deflections of the guide washers (10, 11) and the annular web (6) being limited by stops (23, 24) of the guide washers (10, 11) that become supported against protruding parts (25, 26) of the annular web (6),
wherein the guide washers and the annular web each comprise a first series of stops (23, 25) that mutually interact in order to limit the relative angular deflection in a first rotation direction, and a second series of stops (24, 26) that mutually interact in order to limit the relative angular deflection in a second rotation direction opposite to the first,
the stops of the first series (23, 25) being different from the stops of the second series (24, 26), **characterized in that** the stops of the first series (23, 25) and the stops of the second series (24, 26) are formed by separate protruding elements.

2. Damper according to claim 1, **characterized in that** the separate protruding elements forming the stops of the first series (23, 25) and the stops of the second series (24,26) extend substantially in the axial direction.

3. Damper according to either one of Claims 1 and 2, **characterized in that** the first (23, 25) and the second series (24, 26) of stops are arranged in such a way that an angular sector defined by the travel of the stops (23) of the guide washers (10, 11) of the first series with respect to the annular web (6) between the inactive position and a first extreme position, and an angular sector defined by the travel of the stops (24) of the guide washers (10, 11) of the second series with respect to the annular web (6) between the inactive position and a second extreme position, at least partially overlap.

4. Damper according to any one of Claims 1 to 3, **characterized in that** the stops (23, 24) are shaped onto parts (18, 19) that are added onto the guide washers (10, 11) or onto the annular web (6).

5. Damper according to claim 4, **characterized in that** the added parts (18, 19) are secured, for example by rivets (20), on at least one of the guide washers (10, 11), and the stops of the annular web are formed by protruding parts of the annular web (6).

6. Damper according to either one of Claims 4 and 5, **characterized in that** one of the guide washers (10) carries all the added parts (18) having the stops (23) of the first series, and the other guide washer (11) carries all the added parts (19) having the stops (24) of the second series.

7. Damper according to either one of Claims 4 and 5, **characterized in that** the added parts (18) are all secured on the same guide washer (10), each added part (18) comprising a stop (23) of the first series and a stop (24) of the second series offset circumferentially and radially with respect to the stop (23) of the first series.

8. Damper according to any one of Claims 4 to 7, **characterized in that** the added parts (18, 19) are flat parts that are press-formed and have bent tabs (23, 24) forming the aforesaid stops.

9. Damper according to any one of Claims 4 to 7, **characterized in that** the added parts (18, 19) are parts that are shaped by stamping or machining and have local thickened areas forming the aforesaid stops (23, 24)

10. Damper according to any one of Claims 4 to 9, **characterized in that** the added parts (18, 19) have support surfaces for the elastic members of the damper.

11. Damper according to claim 10, **characterized in that** the added parts (18, 19) are in the shape of an angular sector whose radial edges form the support surfaces for the elastic members.

12. Damper according to any one of Claims 1 to 11, **characterized in that** the maximum angular deflection starting from an inactive position in one rotation direction (D) is different from the maximum angular deflection starting from the inactive position in the other rotation direction (R).

13. Damper according to claim 12, **characterized in that** the maximum angular deflection starting from an inactive position is on the order of 10° to 40°
